# EUROPEAN PATENT APPLICATION

(11) **EP 4 814 466 A1**
(43) Date of publication of application: **30.09.2026**
(21) Application number: 25166937.0
(22) Date of filing: 28.03.2025
(51) Int. Cl.: G01L 21/34

(54) **METHOD FOR THE MEASUREMENT OF VACUUM PRESSURE BY MEANS OF A COLD CATHODE VACUUM GAUGE AND ELECTRICAL CIRCUIT THEREFOR**

(71) Applicant: INFICON AG, 9496 Balzers (LI)
(72) Inventor: STRIETZEL, Carsten, 35781 Weilburg (DE); WÄLCHLI, Urs, 7000 Chur (CH)
(74) Representative: Troesch Scheidegger Werner AG

(57) **Abstract**

The present invention relates to a method for the measurement of vacuum pressure by means of a cold cathode vacuum gauge (VG), the cold cathode vacuum gauge (VG) comprising a measurement chamber fluidly connectable to a vacuum containing system for the measurement chamber to contain the same vacuum, wherein a first electrode (VG-1) within the measurement chamber is configured to be operated as a cathode and a second electrode (VG-2) within the measurement chamber is configured to be operated as an anode, and wherein the first and second electrodes (VG-1, VG-2) are electrically connected to a power supply (Us). The method is characterized by determining by means of a voltage and/or current measurement whether the cold cathode vacuum gauge (VG) has a negative differential resistance; and determining that the vacuum pressure is in a high-pressure range if the cold cathode vacuum gauge (VG) has a negative differential resistance, or that the vacuum pressure is in a low-pressure range if the cold cathode vacuum gauge (VG) has a positive differential resistance. The present invention also relates to an electrical circuit for the measurement of pressure by means of said method.

## Description

### TECHNICAL FIELD OF THE INVENTION

The present invention relates to a method for the measurement of vacuum pressure by means of a cold cathode vacuum gauge and to an electrical circuit therefor.

For the method for the measurement of vacuum pressure by means of a cold cathode vacuum gauge, the cold cathode vacuum gauge comprises a measurement chamber fluidly connectable to a vacuum containing system for the measurement chamber to contain the same vacuum, wherein a first electrode within the measurement chamber is configured to be operated as a cathode and a second electrode within the measurement chamber is configured to be operated as an anode, and wherein the first and second electrodes are electrically connected to a power supply. In typical cases, the cold cathode vacuum gauge also comprises one or more magnets.

Likewise, the electrical circuit for employing said method comprises a cold cathode vacuum gauge comprising a measurement chamber fluidly connectable to a vacuum containing system for the measurement chamber to contain the same vacuum, wherein a first electrode within the measurement chamber is configured to be operated as a cathode and a second electrode within the measurement chamber is configured to be operated as an anode, and wherein the first and second electrodes are electrically connectable to a power supply. In typical cases, the cold cathode vacuum gauge also comprises one or more magnets.

### DESCRIPTION OF THE RELATED ART

There are a great variety of technical applications making use of a vacuum, such as mechanical handling by means of suction cups, packaging, filtration, degassing, freeze-drying, lamps, **X-**ray tubes, and many more. Also, in film-coating applications not just the presence of a vacuum but the provision of a controlled vacuum environment is required for the successful manufacture of product components, such as in the manufacture of components whose surface is covered with a deposited layer or layer structure of a certain thickness, shape or chemical composition.

Thus, being able to reliably monitor the vacuum quality over a large range of pressure from atmospheric pressure to about 10⁻¹⁰ mbar (UHV - Ultra High Vacuum) and even 10⁻¹³ mbar (XHV - Extreme High Vacuum) is of paramount importance in many applications. For the measurement and monitoring of pressure a number of gauge types are available. The most common ones are diaphragm gauges, Pirani gauges (thermal conductivity gauges), ionization vacuum gauges, quartz friction gauges, and viscosity gauges.

As to the ionization vacuum gauges, there are in principle two types of them, namely hot cathode ionization vacuum gauges and cold cathode ionization vacuum gauges. Both types comprise two electrodes, one of which serves as a cathode and the other as an anode, wherein typically a first electrode has a cylindrical shape, thereby enclosing a discharge space, and a second electrode has a rod shape and is placed within the discharge space enclosed by the first electrode. The discharge space forms the measurement chamber of the vacuum gauge. One or more magnets are arranged in the vicinity of the pair of electrodes, whose magnetic lines of force cross the lines of force of the electric filed that is established by applying a voltage to the first and second electrodes. The crossed electric and magnetic fields lengthen the trajectory of the electrons between the electrodes by forcing them to move along a spiral trajectory so that the probability of an electron-neutral collision is increased and thus of a discharge to occur as a result of an ionization avalanche. If in such an arrangement the cylindrically shaped electrode serves as anode and the rod-shaped electrode serves as cathode, the assembly is called a magnetron-type ionization vacuum gauge, whereas if the cylindrically shaped electrode serves as cathode and the rod-shaped electrode as an anode, the assembly is called an inverted magnetron-type ionization vacuum gauge.

Now, with a hot cathode ionization vacuum gauge, a filament is provided that emits electrons into the discharge space of the gauge as a result of the filament being heated by a current flowing through it, and a grid is provided for collecting the electrons. The ions produced by ionization during a discharge are collected by the anode. The uptake of electrons by the ions at the anode produces a current through the anode which is measured as the discharge current and correlated with the pressure in the discharge space as the pressure is directly proportional to the number of atoms in the discharge space. Such a hot cathode ionization vacuum gauge is described in, **e.g.,** US 2001/0011890 A1.

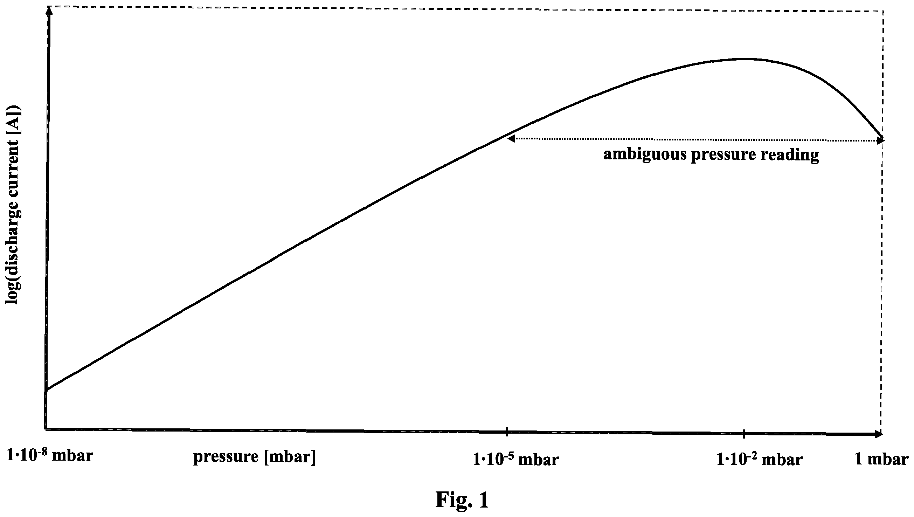

On the other hand, with a cold cathode ionization vacuum gauge, there is no heated filament. Rather, the injection of electrons, if any, is accomplished by field emission from an additional component serving as an electron injector. The cold cathode vacuum gauges known from US 5,767,629 A and US 2018/0010977 A1 are examples of cold cathode vacuum gauges employing an electron injector. With some cold cathode vacuum gauges the discharge takes place without any injection of electrons, in which case the discharge is initiated by an ionization resulting from random events such as the collision of atoms or instances of cosmic rays entering the discharge space. Nevertheless, once a plasma is ignited, the discharge current is correlated with the pressure in the discharge space as a higher pressure means a higher number of atoms is available for ionization and thus for contributing to the discharge current. However, the discharge current is not simply directly proportional to the pressure over the entire pressure range up to atmospheric pressure, but with increasing pressure the discharge current reaches a maximum at around 10⁻² mbar and decreases with a further increase in pressure. This behavior is due the fact peculiar to plasmas that they contain different species of charge carriers, namely electrons and ions, wherein the ions can include different elements, depending on the chemical composition of the plasma, and can have different degrees of ionization. The ions have a much larger inertia compared to the electrons due to their much higher masses and move therefore slowly compared to the electrons. If the pressure and thus the ion density is low, the current between anode and cathode is mostly determined by the electrons. However, if the pressure increases, the ions have an increasing influence on the discharge current between the electrodes in terms of charge transportation and friction produced by collisions between electrons, ions, and neutrals. As a result, with increasing pressure the discharge current increases at first and reaches a maximum but starts to continually decrease with still rising pressure. The discharge current-pressure curve is therefore a curve of convex shape with a maximum at about 10⁻² mbar, as schematically shown in Fig. 1. This leads to an ambiguity of the discharge current reading as to which pressure it indicates if the pressure is close to said maximum, as then it is not clear whether a certain discharge current indicates a pressure above or below said maximum.

To dissolve this ambiguity, according to prior art it is necessary to use auxiliary means in order to measure the pressure where the discharge current reading is ambiguous. Such auxiliary means can be in the form of an additional pressure sensor of a different type, such as a viscosity gauge. The necessity to employ such auxiliary means increases complexity and susceptibility to errors and consequently the maintenance requirements and costs.

### SUMMARY OF THE INVENTION

It is therefore an object of the present invention to provide a method for the accurate measurement of pressure from extreme high vacuum to atmospheric pressure. In particular, it is an object of the present invention to extend the reliable measurement range of a cold cathode vacuum gauge toward and into the high-pressure range.

According to the invention this problem is solved by a method having the features of claim 1 as well as an electrical circuit having the features of claim 11. Further embodiments of the method and electrical circuit according to the invention are subject-matter of the claims dependent on claims 1 and 11, respectively.

The method according to the invention is characterized by
- determining by means of a voltage and/or current measurement whether the cold cathode vacuum gauge has a negative differential resistance; and
- determining that the vacuum pressure is in a high-pressure range if the cold cathode vacuum gauge has a negative differential resistance, or that the vacuum pressure is in a low-pressure range if the cold cathode vacuum gauge has a positive differential resistance.

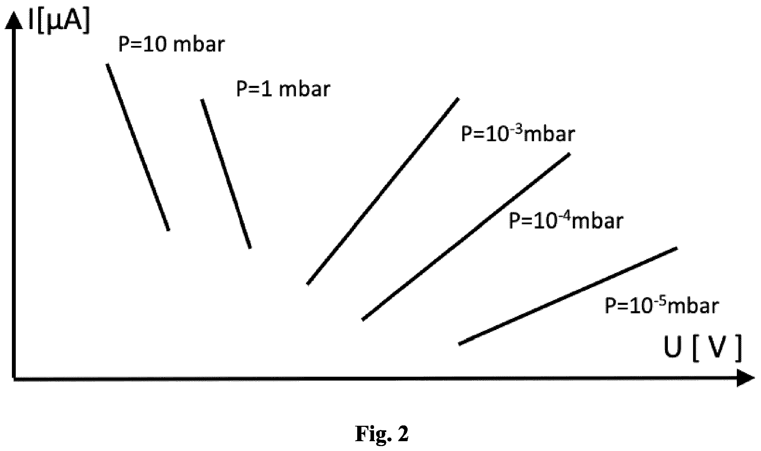

The invention is based on the fact that the pressure depending conductivity of the plasma created during a discharge also leads to different voltage-current characteristics in the high-pressure range compared to the low-pressure range, in that in the high-pressure range the ionization vacuum gauge displays a negative differential resistance and in the low-pressure range a positive differential resistance. A negative differential resistance means that with increasing voltage the current is decreasing, contrary to the behavior of an ohmic resistor, which has a positive differential resistance. With an ohmic resistor the current through it is increasing in proportion to the voltage across the resistor, i.e. the larger the voltage the larger the current. Every increase of the applied voltage results in an increase of the current, i.e. dI/dU > 0, where dU is the voltage differential and dI the current differential. With resistors having a negative differential resistance, however, an increase of the applied voltage leads to a decrease of the current so that dI<0 and thus dI/dU < **0.** This change of differential resistance from positive to negative depending on the pressure corresponds to or is at least in sufficiently close proximity to the maximum of the pressure-discharge current curve shown in Fig. 1 and is schematically depicted in Fig. 2, where U is the voltage measured in Volts, I is the discharge current measured in µA, and p is the pressure measured in mbar. It is believed that this change of differential resistance is likewise a consequence of the fact that in the low-pressure range the charge transportation by electrons is the main mechanism that determines the discharge current, whereas in the high-pressure range, though a plasma is ignited at lower voltages (see Fig. 2) due to the higher gas density, the interaction between electrons, on the one hand side, and ions and neutrals, on the other hand side, becomes such that the discharge current decreases with increasing voltage. The negative differential resistance behavior of the cold cathode vacuum gauge can be determined reliably by a simple voltage and current measurement, wherein the discharge current itself is measured anyway with the operating circuit of a cold cathode vacuum gauge for the determination of pressure. Thus, when it is determined that the cold cathode vacuum gauge has a negative differential resistance, it has been determined that the vacuum is in the high-pressure range past the maximum of the pressure-discharge current curve depicted in Fig. 1 and therefore the read discharge current can be correctly and unambiguously translated into a pressure value.

The high-pressure range is preferably a pressure range whose lower limit is ≥ 10⁻² mbar and the low-pressure range is a pressure range whose upper limit is ≤ 10⁻² mbar. Where the boundary between the high-pressure range and the low-pressure range lies and at which pressure the cold cathode vacuum gauge changes from a positive differential resistance to a negative differential resistance, may depend on the geometry of the measurement chamber, the chemical composition of the remnant gas within the measurement chamber, or impurities within the measurement chamber, such as dust particles. In typical cases, however, the high-pressure range has a pressure equal to or greater than 10⁻² mbar and the low-pressure range is equal to or smaller than 10⁻² mbar so that the differential resistance behavior of the cold cathode vacuum gauge changes from positive to negative (increasing pressure) at a pressure of approximately 10⁻² mbar.

In a particularly preferred embodiment of the method, the cold cathode vacuum gauge is integrated into an oscillator circuit. Electrical components with negative differential resistance as such are known from prior art. For example, tunnel diodes are known to have a negative differential resistance in a certain voltage region. With such components, circuits can be designed making use of the negative differential resistance characteristic, such as amplifier circuits of oscillating circuits. As a result, such circuits can be implemented by a cold cathode vacuum gauge as well, where the cold cathode vacuum gauge has a negative differential resistance in a high-pressure range, i.e. if the pressure in the measurement chamber is in a high-pressure range, so that the cold cathode vacuum gauge can form the negative differential resistance component in the circuit and the circuit shows the corresponding output.

Accordingly, in a preferred embodiment of the invention, the method comprises the steps of:
- measuring as a function of time a voltage across the cold cathode vacuum gauge and/or a current through the same, thereby obtaining a measurement signal;
- determining whether the vacuum is in a high-pressure range if the measurement signal is an oscillating signal, or in a low-pressure range if the measurement signal is not an oscillating signal.

With this embodiment, an oscillator circuit is implemented and the cold cathode vacuum gauge as its negative differential resistance component is integrated therein. The voltage across the cold vacuum gauge and/or the current through the same is measured so as to obtain a measurement signal. Should this measurement signal be an oscillating signal, this means that an oscillator circuit has indeed been realized with the cold cathode vacuum gauge and thus, that the cold cathode vacuum gauge has a negative differential resistance and the pressure is in the high-pressure range. In an exemplary embodiment, the cold cathode vacuum gauge is connected in parallel with a capacitor so that as long as no plasma is ignited and therefore no discharge current flows between the electrodes of the cold cathode vacuum gauge, the capacitor is charged by the voltage applied to the arrangement formed by parallely connecting the capacitor and the cold cathode vacuum gauge. Once a discharge current flows, the voltage drops and the capacitor is discharged, leading to an evermore decreasing voltage applied to the cold cathode vacuum gauge. Yet, since the cold cathode vacuum gauge has a negative differential resistance (in the high-pressure range), the discharge current still increases, until the capacitor is discharged to such an extent that the voltage is not sufficient anymore to keep the discharge current flowing and the plasma is extinguished. Then, the cold cathode vacuum gauge does not conduct any current at all, leading to the capacitor being charged again, until it is high enough for a plasma to be ignited and a discharge current to flow again. This process is repeated successively so that the measurement signal is oscillating. It is noted that cold cathode vacuum gauges have a capacitance of their own, i.e. an internal capacitance. This capacitance may be sufficient for said oscillations to occur in a manner that allows for a meaningful detection of whether the vacuum in the measurement chamber is in the high-pressure range, where oscillations occur, or in the low-pressure range.

The oscillating measurement signal may be a periodic signal in a preferred embodiment. However, it is not necessary that the oscillations show a strict periodic behavior, meaning that the duration between two maxima (or minima) has an exact value. Rather, the mere fact that the measurement signal is oscillating is indicative that the cold cathode vacuum gauge has a negative differential resistance and thus, that the pressure within the measurement chamber is in the high-pressure range. For a plasma to be ignited within the measurement chamber some first ionization has to take place that leads to an ionization avalanche, which is subject to statistic variation. With any given electron temperature, the electron velocity distribution is a Boltzmann distribution with a peak value determined by the electron temperature and a rapidly decreasing flank of the distribution toward higher electron velocities, i.e. the probability of very high electron velocities is rapidly decreasing, yet not zero at any given electron temperature. Therefore, at any given electron temperature, there are electrons with a high enough kinetic energy to ionize a neutral atom, though the probability of such electrons is increasingly small when the electron temperature decreases. Also, the first ionization can be the result of a cosmic ray entering the measurement chamber. As a result, the observed oscillation frequency may not be strictly periodic and the frequency spectrum may have a certain width.

Furthermore, according to the invention, it is possible to determine the pressure in the measurement chamber on the basis of the current through the cold cathode vacuum gauge in the high-pressure range or the low-pressure range. In a sense, this means to make use of a cold cathode vacuum gauge in the usual manner, where given the correlation between the pressure in the measurement chamber and the discharge current, the pressure is determined on the basis of measuring the discharge current and comparing it with a calibration curve. However, in the prior art this procedure has its limits where the discharge current becomes ambiguous as it could be indicative of a pressure in the low-pressure range or a pressure in the high-pressure range. But once this ambiguity has been removed by determining whether the cold cathode vacuum gauge has a negative differential resistance and is thus operating in the high-pressure range (or in case of a positive differential resistance in the low-pressure range), the pressure can be determined on the basis of the discharge current even at those pressures which lead to inconclusive results when considering the discharge current alone, as in the prior art.

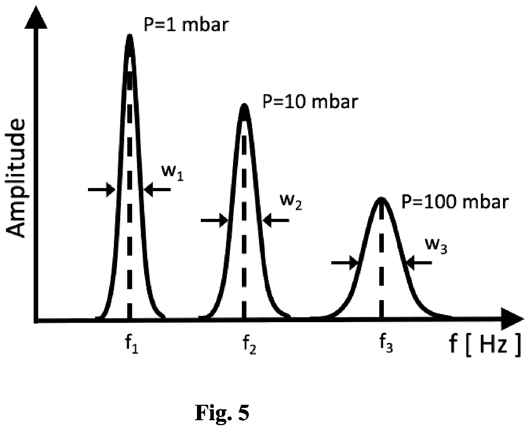

In one aspect of the invention, the pressure in the measurement chamber in the high-pressure range is determined on the basis of a frequency, a center frequency and/or a width of a frequency distribution of the measurement signal. As described above, the oscillation of the measurement signal in the high-pressure range may be somewhat irregular, meaning that in a frequency analysis it is made up of a plurality of periodic signals, i.e. the result of a superposition of periodic signals. In fact, given that with increasing pressure the mean free path length of electrons becomes smaller (and therefore the electron temperature because high-velocity electrons become rarer), the number of electrons whose kinetic energy is high enough for ionization becomes smaller, while at the same time the number of ionization targets, **i.e.** neutral atoms, is increasing. The result is that the variation of the voltage at which a plasma ignites becomes larger and therefore the frequency distribution of the oscillating measurement signal becomes wider. Therefore, the width of the frequency distribution can be used as an indicator of the pressure (in the high-pressure range where the cold cathode vacuum gauge has a negative differential resistance) in the measurement chamber so that the pressure can be determined by determining the width of the frequency distribution. Also, the frequency of the oscillating measurement signal or the center frequency of the frequency distribution is correlated with the pressure in the measurement chamber. In this regard reference is made to Fig. 5, which will be described in detail below.

In one aspect of the invention, a parallel arrangement is formed by electrically connecting the cold cathode vacuum gauge and a capacitor in parallel and said parallel arrangement is electrically connected to the power supply of the circuit, wherein the voltage across said parallel arrangement or a current through the same (or one of its components) is measured, thereby obtaining the measurement signal. As mentioned above, a capacitor of a suitable capacitance can be connected in parallel to the cold cathode vacuum gauge, thereby implementing an oscillator circuit, provided that the cold cathode vacuum gauge has a negative differential resistance, which it does, but only in the high-pressure range as explained above. The power supply delivers the voltage needed for charging the capacitor and igniting a plasma in the measurement chamber of the cold cathode vacuum gauge. Once a plasma is ignited and a discharge current flows between the electrodes of the cold cathode vacuum gauge, the capacitor is discharged, while the voltage across the cold cathode vacuum gauge's electrodes and across the paralelly connected capacitor drops, until it has reached a point where the plasma is extinguished. Then, the capacitor is charged again until the voltage across the capacitor has reached a point at which the plasma is ignited again. This process is successively repeated, leading to an oscillation of the measurement signal. As mentioned before, the internal capacity of the cold cathode vacuum gauge may be sufficient for the voltage across/current through the cold cathode vacuum gauge to be oscillating. However, for said oscillations to be sufficiently clearly observable independently of the specific design of the cold cathode vacuum gauge and therefore independently of the internal capacitance thereof, a separate capacitor may be connected to the cold cathode vacuum gauge in parallel. This capacitor may have an adjustable capacitance so as to yield a suitable measurement signal, **i.e.** a measurement signal whose characteristics can be analyzed with sufficient accuracy.

In a preferred embodiment of the invention, a circuit is provided that comprises a current sensor electrically connected in series with the cold cathode vacuum gauge, thereby allowing for a measurement of the current through the cold cathode vacuum gauge, a frequency counter electrically connected in parallel with the cold cathode vacuum gauge, thereby allowing for a measurement of the frequency of the voltage across the cold cathode vacuum gauge (which may be taken as the measurement signal), and a control unit receiving a first input from the current sensor and a second input from the frequency counter, thereby allowing for an almost instant analysis of the measurement signal and thus determination of the pressure. With such a circuit, the pressure can be accurately determined in the entire pressure range up to atmospheric, including the low-pressure range as well as the high-pressure range. Once the measurement signal in the form of the voltage across the cold cathode vacuum gauge and, if any, a capacitor parallelly connected to the cold cathode vacuum gauge oscillates, the pressure is in the high-pressure range and a pressure can be unambiguously determined on the basis of the current reading by the current sensor, the width of the frequency distribution and/or the center frequency of the frequency distribution. Should the measurement signal not oscillate, the pressure in the measurement chamber is in the low-pressure range and the pressure can likewise be unambiguously determined on the basis of the current reading by the current sensor.

In a further aspect of the invention, a circuit is provided that comprises an oscillator electrically connected to the cold cathode vacuum gauge in order to impart an oscillation generated by the oscillator on the cold cathode vacuum gauge. With this embodiment, an oscillator is provided whose regular oscillation interacts with the oscillating measurement signal of the cold cathode vacuum gauge in the high-pressure range. In the high-pressure range the cold cathode vacuum gauge creates an oscillating measurement signal itself, which then interacts with the imparted regular oscillation of the oscillator. The result is a modification of the oscillating measurement signal in the form of some modulation. It is possible to infer from the quality and quantity of the modulation whether the pressure in the measurement chamber is in the high-pressure range or in the low-pressure range and also to the pressure in the measurement chamber.

In summary, the method according to the invention makes it possible to determine the pressure of a vacuum by means of a cold cathode vacuum gauge over the entire range from 10⁻¹³ mbar to atmospheric pressure. This can be accomplished in the following ways:
- Measuring the current through the cold cathode vacuum gauge (discharge current) and concurrently determining whether there are oscillations of a measurement signal, which can be the voltage across the cold cathode vacuum gauge, **e.g.,** or the discharge current itself. If oscillations are detected, the cold cathode vacuum gauge has a negative differential resistance and the measured discharge current belongs thus to the high-pressure range. On that basis, the discharge current can be correlated unambiguously with a pressure value in the high pressure-range, whereas if no oscillations are detected, the discharge current belongs to the low-pressure range and can also be correlated unambiguously with a pressure value in the low-pressure range.
- Measuring the frequency (or periodic duration) of the oscillating measurement signal and concurrently the current through the cold cathode vacuum gauge. Given that the voltage at which the ignition of a plasma occurs and the voltage at which the plasma goes extinguished are pressure dependent, the pressure can be derived from the frequency or center frequency of the oscillating measurement signal in the high-pressure range, i.e. in the pressure range where the cold cathode vacuum gauge has a negative differential resistance and oscillations of the measurement signal do thus occur. In the low-pressure range, the pressure can be determined on the basis of the discharge current, which is correlated with a pressure value.
- Measuring the frequency spectrum and the width of the frequency distribution of the oscillating measurement signal in order to derive the pressure in the high-pressure range, and measuring the current through the cold cathode vacuum gauge for determining the pressure in the low-pressure range.

In a further aspect of the invention and in line with the method described so far, an electrical circuit is provided that is characterized by
- means for measuring a voltage and/or current; and
- means for determining that the cold cathode vacuum gauge has a negative differential resistance if the vacuum pressure is in a high-pressure range, or that the vacuum pressure is in a low-pressure range if the cold cathode vacuum gauge has a positive differential resistance.

The means for measuring the voltage and/or current may be one of the means known from prior art. When the voltage across the cold cathode vacuum gauge and the current through the same is measured, the differential resistance can be determined by varying the voltage and measuring the corresponding change in current or vice versa.

In a preferred embodiment, the electrical circuit for the measurement of pressure according to invention is an oscillator circuit or an electrical circuit comprising an oscillator whose output provides forced oscillations. A variety of oscillator circuits making use of a component with negative differential resistance is known from prior art, and the cold cathode vacuum gauge can be used in these circuit designs as the component with negative differential resistance, provided the pressure in the measurement chamber is in the high-pressure range. The oscillating measurement signal outputted by these circuits can be used to determine the pressure in the high-pressure range, as explained above.

According to a further embodiment, the electrical circuit comprises
- a series connection of the cold cathode vacuum gauge and a current sensor forming a gauge part of the circuit;
- a first resistor or a voltage divider electrically connected in parallel to the gauge part of the circuit;
- a frequency counter electrically connected to the first resistor or voltage divider; and
- a control unit configured to receive a first input from the current sensor and a second input form the frequency counter, wherein the control unit is configured to output a signal corresponding to the pressure in the measurement chamber.

In this circuit, the discharge current is measured by the current sensor and the voltage across the cold cathode vacuum gauge is measured via the voltage across the first resistor or the voltage divider. A frequency counter is used to determine the frequency of this voltage. A control unit is used for analyzing the outputs of the frequency counter and of the current sensor so as to determine the pressure in the measurement chamber of the cold cathode vacuum gauge.

In a further preferred embodiment of the electrical circuit according to the invention, the electrical circuit comprises a second resistor electrically connected to the cold cathode vacuum gauge or the current sensor in series. This second resistor limits the discharge current to a maximum thereby preventing damages to the cold cathode vacuum gauge due to excessive discharge currents.

In yet another preferred embodiment, a capacitor is electrically connected in parallel to the cold cathode vacuum gauge or the gauge part of the circuit, and/or a capacitor is electrically connected between the first resistor or voltage divider and the frequency counter for providing an input signal to the frequency counter. The capacitor in parallel to the cold cathode vacuum gauge or the gauge part is provided for the oscillations occurring in the high-pressure range to be suitable for accurate measurement and analysis. If the capacitance is too small, even a fully charged capacitor does not provide sufficient voltage for a discharge current to occur (a plasma to be ignited). If, on the other hand, the capacitance is too high, the capacitor is charged to the point of a discharge in the cold cathode vacuum gauge so rapidly that the duration of the oscillations is very small and it may then be difficult to detect their presence or determine their frequency distribution accurately.

### BRIEF DESCRIPTION OF THE DRAWINGS

Embodiments of the present invention are described in more detail below with reference to the attached drawings.
Fig. 1 depicts schematically the dependency of the discharge current of a cold cathode vacuum gauge on the pressure in its measurement chamber,
Fig. 2 depicts schematically the current-voltage characteristic of a cold cathode vacuum gauge at different pressures,
Fig. 3 depicts a first embodiment of an electrical circuit for employing the method according to the invention,
Fig. 4 depicts schematically the course of the discharge current and voltage across a cold cathode vacuum gauge in the high-pressure range,
Fig. 5 depicts schematically the frequency distribution of an oscillating measurement signal in the high-pressure range, obtained by a cold cathode vacuum gauge,
Fig. 6 depicts a second embodiment of an electrical circuit for employing the method according to the invention, and
Fig. 7 depicts a third embodiment of an electrical circuit for employing the method according to the invention.

### DETAILED DESCRIPTION OF THE INVENTION

Fig. 1 depicts schematically the dependency of the discharge current of a cold cathode vacuum gauge on the pressure in its measurement chamber. As has been described above, the discharge current in a cold cathode vacuum gauge is correlated with the pressure in a manner that in the low-pressure range up to approximately 10⁻⁵ mbar the discharge current is positively correlated with the pressure within the measurement chamber of the cold cathode vacuum gauge, i.e. the higher the discharge current, the higher the pressure. With increasing pressure the discharge current reaches a maximum at approximately 10⁻² mbar and is then decreasing as the pressure rises further. In the low-pressure range the discharge current is dominated by the movement of electrons between the electrodes of the cold cathode vacuum gauge, but with increasing pressure the ions contribute more and more to the discharge current and internal friction of the plasma becomes increasingly significant. As a result, the discharge current-pressure curve has a convex shape with a peak at approximately 10⁻² mbar. As a result, at a pressure higher than approximately 10⁻⁵ mbar, in the exemplary curve shown in Figure 1, the discharge current reading is ambiguous in that a discharge current reading could indicate a pressure in front of or after the maximum of the curve. Therefore, if only the discharge current is measured the pressure can be determined unambiguously only at lower pressures.

Fig. 2 depicts schematically the current-voltage characteristic of a cold cathode vacuum gauge at different pressures. As can be seen in Fig. 2, at pressures of 1 mbar or 10 mbar the discharge current of the cold cathode vacuum gauge is decreasing when the voltage across the electrodes of the cold cathode vacuum gauge is increased, or vice versa. On the other hand, at pressures of 10⁻³, 10⁻⁴, and 10⁻⁵ mbar the discharge current increases with increasing voltage across the cold cathode vacuum gauge's electrodes, or vice versa. This behavior of a cold cathode vacuum gauge in terms of its differential resistance is according to the invention used to determine whether the pressure in the measurement chamber of the cold cathode vacuum gauge is in a low-pressure range or a high-pressure range.

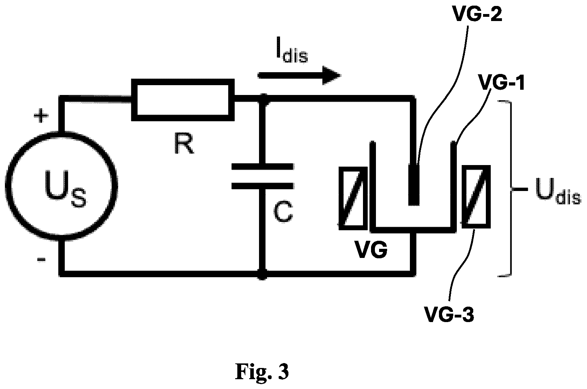

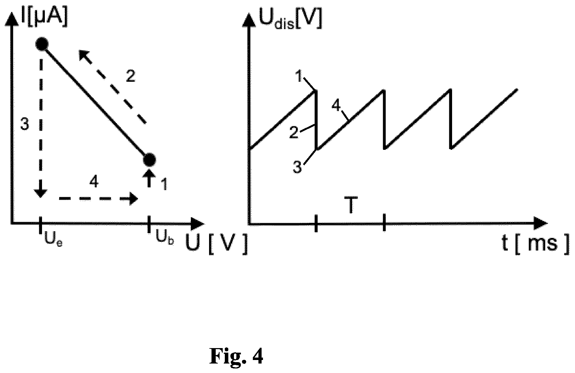

Fig. 3 depicts a first embodiment of an electrical circuit for employing the method according to the invention. The circuit shown in Fig. 3 is an oscillator circuit, comprising a voltage source U_{S}, an ohmic resistor R, capacitor C, and a cold cathode vacuum gauge VG. The cold cathode vacuum gauge comprises, as is schematically shown, a cylindrical electrode VG-1 serving as cathode, a rod-shaped electrode VG-2 arranged in the center of electrode VG-1 and serving as anode, and magnets VG-3 surrounding the electrode VG-1. The magnets have a vertical orientation so that their lines of magnetic force penetrate the measurement chamber (discharge space) enclosed by the cylindrically shaped electrode VG-1 such that they cross the substantially radially oriented lines of force of the electric field extending between the electrodes VG-1, VG-2. By virtue of the presence of a magnetic field as well as an electric field, a Lorentz force is exerted on the free electrons moving between the electrodes VG-1, VG-2. The Lorentz force is oriented perpendicular to both the electric field orientation and the magnetic field orientation at the respective position of a free electron, thereby forcing the electron to follow a spiral trajectory toward the cathode, thereby increasing the probability of a collision between the electron and a neutral and thus, the probability of an ionization event. The voltage source applies a DC voltage to the entire circuit. The ohmic resistor R limits the discharge current I_{dis} in order to avoid any damages to the cold cathode vacuum gauge by an excessive discharge current I_{dis}. The parallel arrangement of the capacitor C and the cold cathode vacuum gauge allows for oscillations of the discharge current and the voltage U_{dis} across the cold cathode vacuum gauge. How this takes place is explained with respect to Fig. 4.

Fig. 4 depicts schematically the course of the discharge current and voltage across a cold cathode vacuum gauge VG in the high-pressure range. In the left part of Fig. 4, the discharge current I_{dis} is shown as a function of the voltage U_{dis} across the cold cathode vacuum gauge VG, wherein the cold cathode vacuum gauge VG is operating in the high-pressure range where it has a negative differential resistance and as a result, the discharge current I_{dis} as well as the voltage U_{dis} are oscillating. At the point indicated by arrow 1 in the left part of Fig. 4 a plasma is ignited in the measurement chamber of the cold cathode vacuum gauge VG at a voltage U_{b} with the resulting onset of a discharge current I_{dis} that becomes increasingly higher during its duration. Since in this state the cold cathode vacuum gauge VG is a conductor, the capacitor C (see Fig. 3) is discharged so that the voltage U_{dis} across capacitor C and therefore across the parallely connected cold cathode vacuum gauge VG is decreasing. However, though the voltage U_{dis} is decreasing, the discharge current I_{dis} is ever more increasing, which is indicated by arrow 2 in the left part of Fig. **4****.** Thus, a decreasing voltage U_{dis} is accompanied by an increasing discharge current I_{dis}, meaning that the cold cathode vacuum gauge VG has a negative differential resistance. The discharge voltage U_{dis} decreases until it has reached a point where it is not sufficient anymore to keep a plasma ignited and therefore the plasma goes extinguished at voltage Uₑ indicated by arrow 3 in the left part of Fig. 4. Once the plasma is extinguished, the cold cathode vacuum gauge VG does not conduct a current anymore so that the voltage applied to capacitor C and the parallelly connected cold cathode vacuum gauge VG by the voltage source U_{S} leads to a charging of capacitor C, which is indicated by arrow 4 in the left part of Fig. 4. The charging of capacitor C proceeds until the voltage across capacitor C is sufficient to ignite a plasma in the measurement chamber of the cold cathode vacuum gauge VG again, i.e. at voltage U_{b} indicated by arrow 1.

This process underlying the oscillation of the voltage U_{dis} across the cold cathode vacuum gauge VG is also shown in the right part of Fig. 4. The positions 1, 2, 3, and 4 depicted in the right part of Fig. 4 correspond to the arrows 1 through 4 in the left part thereof. It can be seen that the voltage U_{dis} is an oscillating signal and can be taken as the oscillating measurement signal on whose basis the pressure is determined. The duration between two maxima of the U_{dis} signal is the period T and the frequency f is obtained from f=1/T. In this example, the measurement signal in the form of the voltage U_{dis} is a regular signal with a more or less constant period. However, at higher pressures the voltage at which a plasma is ignited tends to vary, given that the mean free path length of the electrons is smaller than at a lower pressure and therefore the electron temperature is smaller as the electrons are prevented from gaining high kinetic energies by collisions. On the other hand, at higher pressure the density of the collision targets is higher. As a result, the variation of the voltage at which a plasma is ignited is the larger the higher the pressure is. Hence, the oscillating voltage signal is more irregular at higher pressures. Now, every oscillating signal can be described as a superposition of periodic signals of different frequency and amplitude. Thus, a greater irregularity of the voltage signal U_{dis} means that the frequency distribution of the voltage signal in a spectral analysis becomes wider. This is shown schematically in Fig. 5.

Fig. 5 depicts schematically the frequency distribution of an oscillating measurement signal in the high-pressure range, obtained by a cold cathode vacuum gauge VG. In this case, the voltage U_{dis} across the cold cathode vacuum gauge VG is taken as the measurement signal. The amplitude is shown as a function of frequency. In Fig. 5, for the pressures 1 mbar, 10 mbar and 100 mbar the frequencies are shown whose superposition results in the measured voltage signal U_{dis}. The frequency distribution at the said pressures has the shape of a peak with a certain width w₁, w₂, w₃ and center frequency f₁, f₂, f₃. As can be seen, the larger the pressure in the measurement chamber of the cold cathode vacuum gauge VG, the more strictly periodic signals (having an exact frequency) must be superposed in order to obtain the actually measured voltage signal U_{dis}. That is, the width of the respective frequency distribution becomes larger with increasing pressure. Also, with increasing pressure the center frequency of the peak is increasing, meaning that the oscillations become ever more rapid with increasing pressure. As a result, the width of the frequency distribution and also the center frequency can be used to determine the pressure.

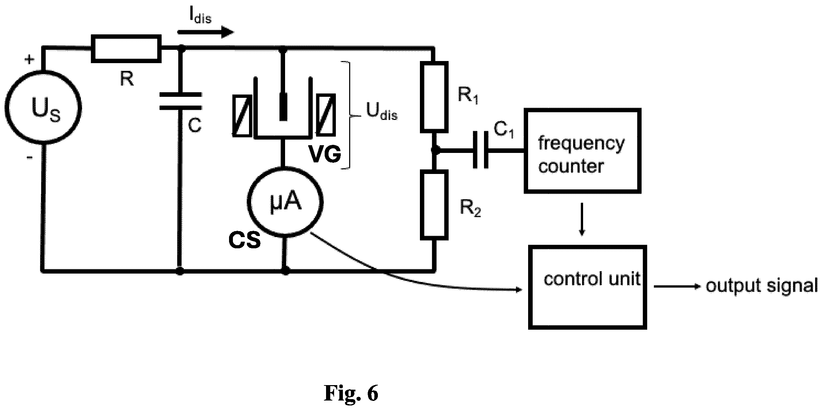

Fig. 6 depicts a second embodiment of an electrical circuit for employing the method according to the invention. Like the circuit shown in Fig. 3, a DC voltage source U_{S} applies a voltage to the entire circuit and a resistor R limits the discharge current. A cold cathode vacuum gauge VG, a capacitor C, and a voltage divider R1, R2 are connected in parallel. A current sensor CS is connected in series with the cold cathode vacuum gauge VG that allows for the measurement of the discharge current I_{dis}. The parallel arrangement of capacitor C and cold cathode vacuum gauge VG forms an oscillator circuit, provided that the cold cathode vacuum gauge has a negative differential resistance, which it has in the high-pressure range, as has been described above with respect to Fig. 3. Consequently, in the high-pressure range the voltage signal U_{dis} is oscillating, as described above with respect to Figs. 4 and 5. With the circuit shown in Fig. 6 the frequency of this oscillation can be determined by the frequency counter, wherein voltage divider R1, R2 allows for suitably splitting the voltage signal U_{dis} according to the requirements of the frequency counter input in terms of maximum voltage or measurement accuracy. A capacitor C1 is connected between resistor R1 and the frequency counter and prepares the voltage signal for being inputted into the frequency counter by removing a DC component so as to yield a pure AC signal, which is required for input signals of typical frequency counters. Capacitor C1 may be omitted if the frequency counter input signal requirements allow for the input signal to contain a DC component. Other signal adjusting components may be employed instead of capacitor C1, such as a combination of a capacitor and an ohmic resistance forming a high-pass filter, or other frequency filtering elements such as a low-pass filter. The output of the frequency counter as well as the output of the current sensor CS are inputted into the control unit, which analyzes the output of the frequency counter so as to determine the width and/or center frequency of the frequency distribution and on that basis the pressure in the measurement chamber of the cold cathode vacuum gauge VG in the high-pressure range, whereas in the absence of oscillations of the voltage signal U_{dis}, i.e. in the low-pressure range, the control unit determines the pressure on the basis of the discharge current read by the current sensor.

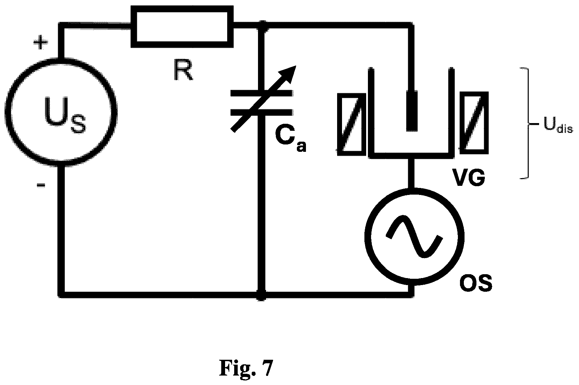

Fig. 7 depicts a third embodiment of an electrical circuit for employing the method according to the invention. In this embodiment, the circuit comprises, like the circuit of the first embodiment shown in Fig. 3, a voltage source U_{S and} a resistor R. A capacitor Cₐ is connected in parallel with a cold cathode vacuum gauge VG. In addition, an oscillator OS is connected in series with the cold cathode vacuum gauge VG and imparts a forced oscillation on the cold cathode vacuum gauge VG operating in the high-pressure range, i.e. at a pressure where the cold cathode vacuum gauge VG has a negative differential resistance and the voltage U_{dis} across the same is itself oscillating. The impartment of a forced oscillation by the oscillator OS leads to a modulation of the voltage signal U_{dis}, which modulation depends on the frequency and amplitude of the output of oscillator OS. In addition, the oscillating voltage signal U_{dis} may be adjusted by adjusting the capacitance of capacitor Cₐ. The idea of this circuit design is to analyze the modulated signal and to determine the pressure on the basis of characteristics of the modulation. Oscillator OS may be turned on and off during a measurement so that the information gathered from an analysis of the modulation is available in addition to the information gathered without forced oscillations.

### LIST OF REFERENCE SIGNS

- C: capacitor
- C1: capacitor
- Ca: capacitor
- CS: current sensor
- I_{dis}: discharge current
- I: current
- f: frequency
- R: resistor
- R₁: resistor
- R₂: resistor
- t: time
- U: voltage
- U_{dis}: discharge voltage
- Uₑ: extinguishment voltage
- U_{b}: ignition voltage
- U_{S}: voltage source
- VG: cold cathode vacuum gauge
- VG-1: electrode
- VG-2: electrode
- VG-3: magnet

## Claims

1. Method for the measurement of vacuum pressure by means of a cold cathode vacuum gauge (VG), the cold cathode vacuum gauge (VG) comprising a measurement chamber fluidly connectable to a vacuum containing system for the measurement chamber to contain the same vacuum, wherein a first electrode (VG-1) within the measurement chamber is configured to be operated as a cathode and a second electrode (VG-2) within the measurement chamber is configured to be operated as an anode, and wherein the first and second electrodes (VG-1, VG-2) are electrically connected to a power supply (U_{S}) **characterized by**
- determining by means of a voltage and/or current measurement whether the cold cathode vacuum gauge (VG) has a negative differential resistance; and
- determining that the vacuum pressure is in a high-pressure range if the cold cathode vacuum gauge (VG) has a negative differential resistance, or that the vacuum pressure is in a low-pressure range if the cold cathode vacuum gauge (VG) has a positive differential resistance.

2. Method according to claim **1,** wherein the high-pressure range is a pressure range whose lower limit is ≥ 10⁻² mbar and the low-pressure range is a pressure range whose upper limit is ≤ 10⁻² mbar.

3. Method according to claim 1 or 2,
- measuring as a function of time a voltage across the cold cathode vacuum gauge (VG) and/or a current through the same, thereby obtaining a measurement signal;
- determining whether the vacuum is in a high-pressure range if the measurement signal is an oscillating signal, or in a low-pressure range if the measurement signal is not an oscillating signal.

4. Method according to one of the preceding claims, wherein the oscillating signal is a periodic signal.

5. Method according to one of the preceding claims, wherein the pressure in the measurement chamber is determined on the basis of the current through the cold cathode vacuum gauge (VG) in the high-pressure range or the low-pressure range.

6. Method according to one of the preceding claims, wherein the pressure in the measurement chamber is in the high-pressure range determined on the basis of a frequency, a center frequency and/or a width of a frequency distribution of the measurement signal.

7. Method according to one of the preceding claims, wherein a parallel arrangement is formed by electrically connecting the cold cathode vacuum gauge (VG) and a capacitor (C) in parallel and said parallel arrangement is electrically connected to the power supply (U_{S}), wherein the voltage across said parallel arrangement or a current through the same is measured, thereby obtaining the measurement signal.

8. Method according to one of the claims 2 to 7, wherein a circuit is provided that comprises a current sensor (CS) electrically connected in series with the cold cathode vacuum gauge (VG), a frequency counter electrically connected in parallel with the cold cathode vacuum gauge (VG), and a control unit receiving a first input from the current sensor (CS) and a second input from the frequency counter.

9. Method according to claim 1, wherein a circuit is provided that comprises an oscillator (OS) electrically connected to the cold cathode vacuum gauge (VG) in order to impart an oscillation generated by the oscillator (OS) on the cold cathode vacuum gauge (VG).

10. Method according to claim 9, wherein the cold cathode vacuum gauge (VG) and/or the oscillator is electrically connected in parallel with a capacitor (Cₐ) with adjustable capacitance.

11. Electrical circuit for the measurement of pressure by means of the method according to one of the claims 1 to 10, the electrical circuit comprises a cold cathode vacuum gauge (VG) comprising a measurement chamber fluidly connectable to a vacuum containing system for the measurement chamber to contain the same vacuum, wherein a first electrode (VG-1) within the measurement chamber is configured to be operated as a cathode and a second electrode (VG-2) within the measurement chamber is configured to be operated as an anode, and wherein the first and second electrodes (VG-1, VG-2) are electrically connectable to a power supply
**characterized by**
- means for measuring a voltage and/or current; and
- means for determining that the cold cathode vacuum gauge (VG) has a negative differential resistance if the vacuum pressure is in a high-pressure range, or that the vacuum pressure is in a low-pressure range if the cold cathode vacuum gauge (VG) has a positive differential resistance.

12. Electrical circuit for the measurement of pressure according to claim 11, wherein the electrical circuit is an oscillator circuit or an electrical circuit comprising an oscillator whose output provides forced oscillations.

13. Electrical circuit for the measurement of pressure according to claim 12, comprising
- a series connection of the cold cathode vacuum gauge (VG) and a current sensor (CS) forming a gauge part of the circuit;
- a first resistor (R₁) or a voltage divider (R₁, R₂) electrically connected in parallel to the gauge part of the circuit;
- a frequency counter electrically connected to the first resistor or voltage divider; and
- a control unit configured to receive a first input from the current sensor (CS) and a second input form the frequency counter, wherein the control unit is configured to output a signal corresponding to the pressure in the measurement chamber.

14. Electrical circuit according to claim 13, wherein the electrical circuit comprises a second resistor (R) electrically connected to the cold cathode vacuum gauge (VG) or the current sensor in series (CS).

15. Electrical circuit according to one of the claims 12 to 14, wherein a capacitor (C) is electrically connected in parallel to the cold cathode vacuum gauge (VG) or the gauge part of the circuit, and/or a capacitor (C₁) is electrically connected between the first resistor (R₁) or voltage divider (R₁, R₂) and the frequency counter for providing an input signal to the frequency counter.
